# EUROPEAN PATENT APPLICATION

(11) **EP 4 782 164 A1**
(43) Date of publication of application: **29.07.2026**
(21) Application number: 25154507.5
(22) Date of filing: 28.01.2025
(51) Int. Cl.: B25J 17/02, B23K 9/00, B29C 65/00

(54) **ADAPTER DEVICE FOR A JOINING ARRANGEMENT, JOINING ARRANGEMENT, AND JOINING METHOD**

(71) Applicant: Newfrey LLC, New Britain, CT 06053 (US)
(72) Inventor: Schug, Alexander, 35394 Giessen (DE); Nab, Nicolas, 35394 Giessen (DE); Weber, Kai-Marius, 35394 Giessen (DE); Spieß, Manuel, 35394 Giessen (DE); Schneider, Maik, 35394 Giessen (DE); Schneider, Manuel, 35394 Giessen (DE); Brandl, Björn, 35394 Giessen (DE)
(74) Representative: Witte, Weller & Partner Patentanwälte mbB

(57) **Abstract**

An adapter device (16) for attaching a joining head (14) or a component holder (H) to an industrial robot (12), comprising: a first part (50) which is configured to be fixedly attached to a joining head (14) which defines a joining axis (44) or to a component holder (H) for a component (26) which defines a joining axis (44); and a second part (52) which is configured to be fixedly attached to a robot arm (18), wherein the first part (50) and the second part (52) are connected to each other by means of a linear guide (54) so that the first and second parts (50, 52) can be moved relative to each other in a displacement direction (D) which is parallel to the joining axis (44), wherein the first part (50) and the second part (52) are elastically prestressed into a zero-displacement position (Z), and wherein the second part (52), when being moved in the displacement direction (D), is elastically displaced against the first part (50) if the first part (50) is held against movements in the displacement direction (D). (Fig. 1)

## Description

The present disclosure relates to an adapter device for attaching a joining head or a component holder to an industrial robot. Further, the present disclosure relates to a joining arrangement comprising a joining head and an adapter device. Finally, the present disclosure relates to a method for conducting a joining operation at a joining location on a component.

In the field of vehicle body work, but also in industrial and other transportation vehicle applications, it is known to perform joining operations on components. Typical joining operations are performed on an accessible side of a component, wherein it is not possible to rely on a counter-pressure, such as for example stud welding operations, stud bonding/glueing operations, spot welding operations, plasma joining operations, etc.. In the following, such joining operations will be explained primarily with respect to stud welding operations and equipment, wherein any such descriptions and explanations shall apply to other joining methods as well.

In such applications, it is typically necessary to establish a predetermined relative position between a joining head and the component prior to commencing the joining operation in order to achieve consistent joining results. Therefore, in many cases, the joining head includes a reference member, such as a support foot or mouthpiece, which is brought into contact with the component prior to performing the joining operation to establish the predetermined relative position between the component and the joining head.

Further, joining operations of this type are typically performed in an automated manner using industrial robots. In many applications, a joining head is attached to an arm of a robot via a motorized carriage arrangement. Here, the robot moves the joining head to a location above the component. Subsequently, the robot is held in its position, and the joining head is moved by the motorized carriage arrangement in a manner perpendicular to the component surface and parallel to a joining axis, until the reference member contacts the component surface. Thereafter, the motorized carriage arrangement is controlled so as to apply a predetermined pressure on the component via the reference member, so that the component is fixed by the reference member for a subsequent joining operation. The fixation of the component by the pressure applied via the reference member leads to a stiffening of the arrangement and is beneficial for avoiding vibrations during the joining process, and equalizes tolerances of the joining system.

Document DE 10 2011 076 591 A1 relates to an apparatus for automatic stud welding, wherein a holding element 300 is movably connected to a supply device 200. Guiding means for guiding a movement of the supply device in relation to the holding element are formed by resiliently supported guide columns. The stud welding device does not use a reference element.

Document JP 2008-260058 A discloses a joining device, wherein a joining head is attached to a C-frame. A component on which a joining operation is to be performed is arranged between ends of the C-frame. This joining device cannot be used if a joining location can be accessed only from one side of the component.

Document DE 43 24 223 A1 discloses a joining head that can be attached to a robot. The joining head itself includes a carriage arrangement powered by electromagnets. A joining tool of the joining head is powered by pressurized air.

It is the object of the present disclosure to provide a joining arrangement and a joining method which can be realized at low cost, and to provide an adapter device which serves for this purpose.

The above object is achieved by an adapter device for attaching a joining head or a component holder to a robot, as defined in claim 1 and comprising: a first part which is configured to be fixedly attached to a joining head which defines a joining axis or to a component holder for a component which defines a joining axis; and a second part which is configured to be fixedly attached to a robot arm, wherein the first part and the second part are connected to each other by means of a linear guide so that the first and second parts can be moved relative to each other in a displacement direction which is parallel to the joining axis, wherein the first part and the second part are elastically prestressed into a zero-displacement position, and wherein the second part, when being moved in the displacement direction, is elastically displaced against the first part if the first part is held against movements in the displacement direction.

The adapter device has the advantage that a joining head or a component holder can be attached to an industrial robot without having to use a motorized carriage arrangement. The adapter device is preferable not motorized at all.

The above object is further achieved by a joining arrangement as defined in claim 10, comprising a joining head and an adapter device as defined above, wherein the joining head or a component holder is attached to the first part of the adapter device, and wherein the joining head is configured to perform a joining operation on a component.

Preferably, the joining arrangement also includes a robot having a robot arm which is attached to the second part of the adapter device and is configured to move the adapter device with the joining head or the component holder attached thereto, for the purpose of performing joining operations.

Further, the above object is achieved by a method for performing a joining operation at a joining location on a component according to claim 12. The method, preferably, uses a joining arrangement as defined above.

The method comprises the steps of (i) performing, by a robot, a first relative movement between a joining head and the component to a starting position in which a reference member associated with the joining head contacts a surface of the component, (ii) performing a second movement of the robot to a fixation position, wherein the second movement involves a relative elastic displacement in an adapter device connecting the joining head and the robot or connecting the component and the robot, so that the component is fixed by the reference member for a subsequent joining operation, and (iii) performing the joining operation.

The robot, preferably, is an industrial robot which is not able to provide force-controlled movements into target positions, in contrast to collaborative robots (Cobots) which have contact or approach sensors at the robot arm. Preferably, the robot is configured to move the arm in the three-dimensional space.

The joining operation can be a stud joining operation such as a stud welding operation or a stud bonding operation, can be a spot-welding operation or a plasma joining operation, for example.

The joining operation, preferably, is conducted in an environment, wherein the component can be accessed only from one side thereof.

The method for performing a joining operation and the joining arrangement involve relative movements between the joining head and the component. In one configuration, the joining head is attached to the robot and is moved by the robot with respect to the component which is held stationary. In a second configuration, the component is attached to the robot and is moved by the robot with respect to a stationary joining head. The two configurations can be combined, if necessary.

The adapter device includes a second part which is configured to be fixedly attached to a robot arm. In the first configuration, the first part thereof is configured to be fixedly attached to a joining head which defines a joining axis. This alternative is used if the joining head is moved to a component which is stationary. In the alternative configuration, the first part is configured to be fixedly attached to a component holder for a component which defines a joining axis. Here, the robot is adapted to move the component with respect to a joining head which is stationary.

The adapter device, which is not motorized, is configured to replace a motorized carriage arrangement which is used in the prior art to actively initiate a relative movement between the joining head and the component. The non-motorized adapter device is preferably configured as an adapter plate, wherein the first part and the second part are each plate-like members.

As soon as the first part is held against movements parallel to the joining axis, the robot can continue to move in the displacement direction due to the linear guide, creating a relative movement between the first and second parts. The elastic prestress between the first and second part applies a compressive force to the component (or to the joining head), so that the whole system is stiffened (braced) in such a way as to prevent vibrations during a subsequent joining operation and to compensate or equalize tolerances.

In the method of performing a joining operation, a reference member associated with the joining head contacts a surface of the component and thereby stops further relative movement between the component and the joining head (except for slight elastic deformations of the component, if any).

However, the robot can further continue its movement due to the fact that the adapter device is taking up this further displacement. This leads to a relative displacement between the first and second parts of the adapter plate so that the zero-displacement position is left.

Preferably, leaving the zero-displacement position is detected and the movement of the robot is stopped a predetermined movement length thereafter so as to reach a target displacement position in which the joining head and the component are slightly pressed against each other so as to establish the stiffening effect.

In other words, the component is "clamped" so that a specific relative position is established between a joining tool of the joining head and the joining location on the component. This allows consistently good joining results to be achieved in an automated manner.

It should be noted that the amount of displacement between the first part and the second part preferably depends on the length of a joining member which is to be joined to the component, e.g. a welding stud. In fact, after welding the stud to the component, the entire joining head, in many cases, is moved back from the component in a direction opposite to the displacement direction. Preferably, this movement is also initiated by the robot, and the adapter plate is returned to the zero-displacement position thereby.

Typically, the robot is programmed for moving its arm with its own control device. For the movement of the robot arm along the joining axis so as to elastically displace the first and second part of the adapter device, a program segment of the control device of the robot is preferably managed or controlled by the controller of the joining head. Therefore, it is preferred if a controller of the robot and a controller of the joining head are brought into communication with each other in order to realize the transfer of control of the robot along the displacement direction.

The object is therefore achieved in full.

In a preferred embodiment, the relative displacement is limited to a maximum displacement length of 70 mm or less, particularly of 50 mm or less.

The limitation of the relative displacement is preferably realized by a mechanical limit stop acting between the first and the second part.

The maximum displacement length is preferably sufficient for compensating tolerances and stiffening of the overall joining arrangement for the joining process, as described above. On the other hand, the maximum displacement length allows to securely release a joining element like a stud which has been joined on the component, by moving the robot exactly by the maximum displacement length along the joining axis.

Further, it is preferred if the adapter device comprises a sensor arrangement adapted to detect a relative movement of the first and second parts.

The sensor arrangement is preferably connected to a controller of the joining head. If the joining head is attached to the first part of the adapter device, the sensor arrangement can be connected thereto by wire. If a component holder is attached to the first part of the adapter device, signals of the sensor arrangement may be wired to the joining head or may be transferred in a wireless manner to the joining head. The sensor arrangement may include a Hall sensor, for example.

It is preferred if the sensor arrangement comprises a zero-displacement position sensor which is configured to detect whether the first and second parts reside in the zero-displacement position, or not.

In other words, when the joining head and the component are approaching each other on account of a movement of the robot, and when a reference member contacts the component, the first and second parts start to move relative to each other along the displacement direction. The zero-displacement position sensor detects the start of this relative movement, and a control device may subsequently continue to move the second part along the displacement direction up to a predetermined target displacement position. In the target displacement position, the tolerances are compensated, and the joining arrangement is stiffened for a subsequent joining operation.

On the other hand, it will also be detected whether the zero-displacement position has been reached again on a return movement, which detection might be used to transfer control again to other control segments of the controller of the robot.

It is particularly preferred if the sensor arrangement comprises a sensor signal interface configured for transmitting a sensor signal which carries information on the relative movement of the first and second parts to a joining head.

If the joining head is attached to the first part, the sensor signal interface can be realized by a wired interface (electrical plug). If a component holder is attached to the first part, the sensor signal may be transmitted wirelessly.

In general, it is preferred if the first part and the second part are elastically prestressed into the zero-displacement position by a spring element.

The spring element can be a compression spring, particularly a helical spring which is arranged between respective portions of the first part and the second part, respectively.

In other embodiments, the first part and the second part are elastically prestressed into the zero-displacement position by a pneumatic or hydraulic or magnetic or electromechnical pre-tensioning system. More particularly any system adapted to elastically biase into the zero-displacement position may be used.

Further, it is preferred if the first and second parts are configured to be displaced into a target displacement position which is located between the zero-displacement position and a maximum displacement position.

The target displacement position can be in the target displacement position, the reference element may apply a force on the component which is sufficient to stiffen the joining arrangement for a subsequent joining operation.

The target displacement position may be established by means of a teach-in, using a calibration arrangement on the joining head (or on the component holder).

The spring element is preferably configured to establish a force of larger than 100 N and less than 400 N when the first and second parts are relatively moved into the target displacement position.

Preferably, the pressure force is larger than 150 N and less than 300 N. This force, preferably, corresponds or is identical to the force that a reference member applies on the component.

In a further embodiment, a return movement damper arrangement is located on the first part and/or on the second part and is configured to dampen a relative return movement of the first and second parts into the zero-displacement position.

The joining head of the above-described joining arrangement preferably comprises a reference member associated to the joining head in a manner projecting therefrom and configured to contact the component on which the joining operation is to be performed.

The reference number may be a support leg which is configured to contact the component near the joining location. The reference member may also be a so-called mouthpiece which is arranged concentrically around the joining axis and around a holder for a joining element. In other embodiments, the reference element may be a joining element which is held by a joining element holder in a joining device of the joining head.

The adapter device forms a spring-loaded carriage which is able to compensate tolerances along the joining axis, due to the prestressed first and second parts. The adapter device is not actively driven and does not include any actuator or motor.

It will be understood that the afore-mentioned features and to be described hereinafter cannot only be used in the respectively given combination, but also in different combinations or independently, without leaving the scope of the present invention.

Further features and advantages of the invention can be taken from the subsequent description of preferred embodiments with reference to the drawings. In the drawings:
- Fig. 1: shows a schematic view of a first embodiment of a joining arrangement;
- Fig. 1a: shows a schematic view of a second embodiment of a joining arrangement;
- Figs. 2a and 2b: show the joining arrangement of Fig. 1 in different displacement positions of an adapter device; and
- Fig. 3: shows a schematic longitudinal cross section of another embodiment of a joining arrangement.

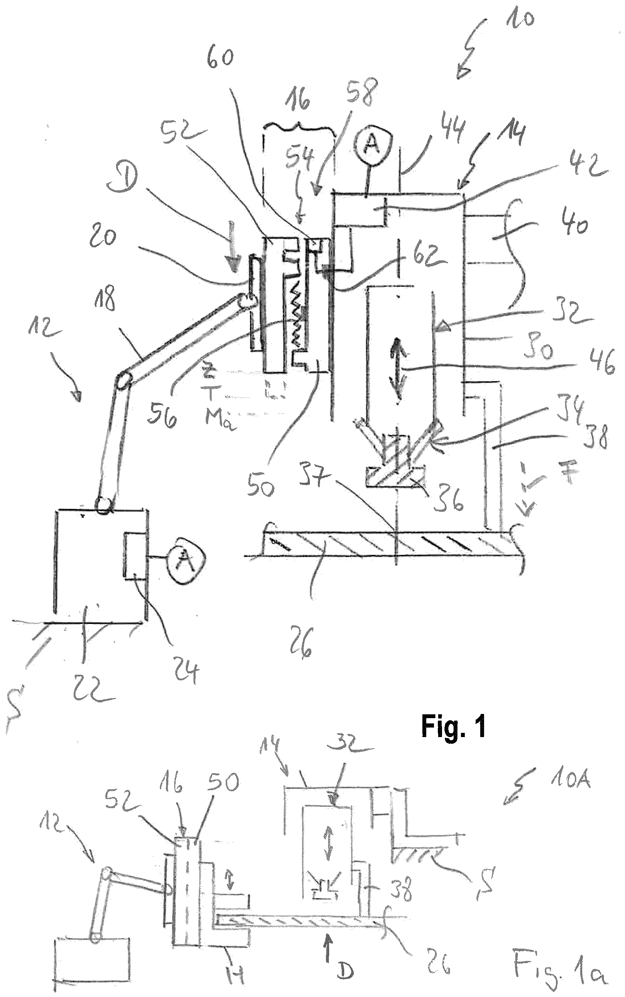

A joining arrangement according to a first embodiment is shown in Fig. 1 at 10.

The joining arrangement 10 includes an industrial robot 12, a joining head 14, and an adapter device 16.

The industrial robot 12 has an arm 18 or a plurality of arms. At the end of the arm(s) 18, a mounting plate 20 is connected. The robot 12 includes a robot base 22 which is arranged on a ground S and is thus stationary. The robot 12, further, includes a control device 24 which is either included in the robot base 22 or at a different location, e.g. in a higher level control device.

The joining arrangement 10 is configured to perform a joining operation on a component 26, which can be a metal sheet, for example. In the present embodiment, the component 26 is essentially held stationary (not shown in detail in Fig. 1).

The joining head 14 includes a joining head housing 30 in which a joining device 32 is arranged. The joining device 32 includes a holding device 34 for holding a joining element 36 such as a stud. The joining arrangement 10 is configured to join (e.g. weld or bond) the joining element 36 to the component 26 at a joining location 37.

A reference member 38 is associated to the joining head 14. In the present case, the reference member 38 is rigidly attached to the joining head housing 30, and is formed by a support leg.

The joining head 14 includes a supply interface 40 for supplying the joining head with energy, with control signals, with joining elements, etc., as is known in general in the prior art.

Further, the joining head 14 includes a control device 42 which can be arranged at the joining head 14 itself or at a different location (e.g. at a higher level control device).

The control device 42 of the joining head 14 and the control device 24 of the robot 12 are connected to each other, as is shown at A, so that control software running on the control devices 24, 42 can communicate.

The joining head 14 is configured to perform the joining operation along a joining axis 44 which is typically perpendicular to a surface of the component 26.

The joining device 32 is configured to perform movements 46 along the joining axis 44 relative to the joining head housing 30, in order to conduct a joining operation.

In one example, the joining operation is a stud welding operation. The stud welding operation may be performed essentially as follows, assuming the following situation: The joining head housing 30 is located above the component 26. The distance between the joining head housing 30 and the component 26 is established by the reference member 38.

The joining device 32 then moves a joining element 36 onto the surface of the component 26. Subsequently, an electric pilot current is switched on which flows from the joining element 36 to the component 26 (or vice versa). Subsequently, the joining element 36 is lifted from the surface of the component 26 by means of the joining device 32, so that an electrical arc is drawn between the joining element 36 and the component 26. The electric current is switched from a pilot current to a welding current. If the opposing surfaces are molten, due to the welding current which is higher than the pilot current, the joining element 36 is moved again down to the component 26. The welding current is switched off. The molten materials of the joining element 36 and the component 26 are mixed and solidified, whereby a stud welded joint is created.

In a final step, the joining element 36 is released by the holding device 34, and the joining head 14 and/or the joining device 32 is lifted up from the component 26.

The adapter device 16 of the joining arrangement 10 includes a first part 50 and a second part 52. The first part 50 and the second part 52 are connected to each other by means of a linear guide 54, so that they can be moved relative to each other. The adapter device 16 may include a spring member 56 by means of which the first part 50 and the second part 52 are prestressed into a zero-displacement position Z. In another embodiment, the spring member 56 may be replaced by a pneumatic or hydraulic or magnetic or electromechnical pre-tensioning system. More particularly any system adapted to elastically biase into the zero-displacement position may be used.

The first part 50 and the second part 52 can be moved relative to each other by the linear guide 54 up to a maximum displacement position Ma. The length between the zero-displacement position Z and the maximum displacement position Ma is typically 50 mm or less.

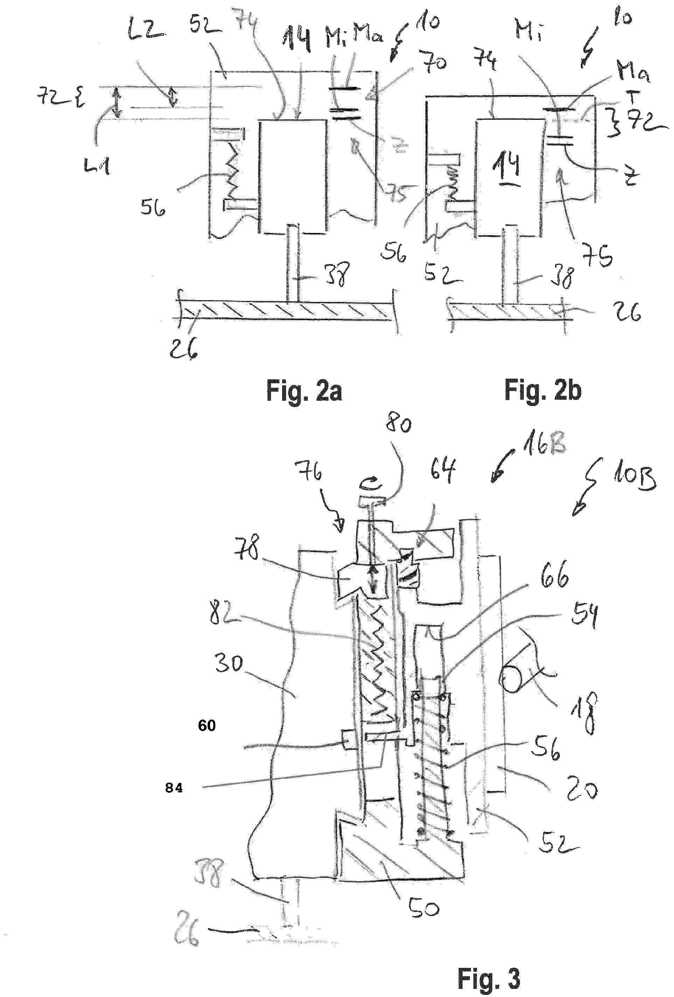

The adapter device 16 includes a sensor arrangement 58. The sensor arrangement 58 includes a zero-displacement position sensor 60 which is adapted to detect whether the first and second parts 50, 52 reside in the zero-displacement position Z, or not. The zero-displacement position sensor 60 may include a Hall-sensor which is arranged on one of the first and second parts 50, 52. The Hall-sensor is configured to detect the presence of a counter-member on the other one of the first and second parts 50, 52. In order to compensate for a certain overlap between the Hall-sensor and the counter element, a minimum displacement position Mi (cf. Fig. 2) is defined which involves a certain displacement between the first and second parts 50, 52 and is a position in which the Hall-sensor does certainly not detect the presence of the counter element anymore.

The zero-displacement position sensor 60 is connected to a sensor signal interface 62 which is configured for transmitting a sensor signal carrying information on the relative movement of the first and second parts 50, 52.

The first part 50 of the adapter device 16 is fixedly attached to the joining head 14. The second part 52 of the adapter device 16 is fixedly attached to the mounting plate 20 of the robot 12. The adapter device 16 is connected to the joining head 14 such that the linear guide 54 is arranged in parallel to the joining axis 44 of the joining head 14.

For conducting a joining operation, the robot 12 moves the mounting plate 20 in relation to the component 26 in a first relative movement to a starting position in which the reference member 38 contacts the surface of the component 26, as described above.

In order to compensate tolerances and in order to stiffen the joining arrangement 26 for a subsequent joining operation, the robot 12 then moves the mounting plate 20 in parallel to the joining axis 44. This second movement involves a relative elastic displacement in the adapter device 16. Namely, the joining head 14 is held against a movement in direction to the component 26 on account of the reference member 38 contacting the component 26. Therefore, the second movement of the mounting plate 20 in the direction parallel to the joining axis 44 leads to a relative displacement between the first part 50 and the second part 52 against the prestress of the spring member 56 along a displacement direction D. The first relative movement and the second movement may be performed without intermediate stop.

The relative displacement of the first and second parts 50, 52 is detected by the zero-displacement position sensor 60, which signal is transmitted to the joining head 14, particularly to its control device 42. The control device 42 is connected to the control device 24 of the robot. The robot 12 is, in response to the signal from the zero-displacement position sensor 60, configured to move the mounting plate 20 parallel to the joining axis 44 to a target displacement position T which is located between the zero-displacement position Z (or the minimum displacement position Mi) and the maximum displacement position Ma.

On account of the relative displacement between the first and second parts 50, 52, the spring member 56 is tensioned, which leads to an application of a force F by the reference member 38 on the component 26, so that tolerances are compensated and the joining arrangement is stiffened for a subsequent joining operation.

The spring member 56 is configured such that, in the target displacement position T, a force F of larger than 100 N and less than 400 N, particularly larger than 150 N and less than 300 N is applied to the component 26.

After the joining operation has been performed, the robot 12 moves the mounting plate 20 again in a return movement by the same displacement length, so that the spring member 56 is relaxed and the first and second parts 50, 52 may reside in the zero-displacement position Z. As soon as this position has been reached (which can again be detected by the sensor 60 and processed by the control devices 42, 24), the robot, on account of its control device 24, may move the mounting plate again freely, for performing another joining operation at a different joining location, for example.

Fig. 1a shows an alternative embodiment of a joining arrangement 10A. The joining arrangement 10A corresponds with respect to the general layout and the general function of the joining arrangement of Fig. 1. In the following, essentially only differences will be explained.

In contrast to the embodiment of Fig. 1, the first part 50 of the adapter device 16 is connected to a component holder H which is adapted to hold a component 26, so that the component 26 can be moved by the robot 12. On the other hand, the joining head 12 is located at a stationary position, as is indicated schematically at S in Fig. 1a. The relative movements between the joining head 14 and the component 26 can be performed in a manner similar to what has been described with respect to Fig. 1. Possibly, a zero-displacement position sensor 60 of the adapter device 16 may be configured to transmit its signal to the control device 24 of the robot 12 or wirelessly to the control device 42 of the joining head 14.

Figs. 2a and 2b show schematically the relative displacement of the joining head 16 (which is connected to the first part 50), and the second part 52 of the adapter device 16.

In Fig. 2a, the first part 50 and the second part 52 are not displaced against each other and the spring member 56 is not tensioned.

In order to calibrate the joining arrangement 10 in a teach-in (particularly the program segments of the control devices 24, 42), a calibration arrangement 70 is provided at the adapter device 16. The calibration device 70 is formed by markings (displacement indicators) on one of the two parts 50, 52, which allow to compare relative displacements of the first and second parts 50, 52. In the present case, the calibration arrangement 70 is located on the second part 52 and is arranged with respect to a calibration line of the joining head 14, namely a displacement reference line 74 on the head (e.g. an upper surface of the joining head housing 30).

As can be seen in Fig. 2a, the reference line 74 is aligned with a zero-displacement indicator Z of the calibration arrangement 70. The calibration arrangement 70 also includes an indicator Mi which shows a minimum displacement position Mi, and an indicator Ma which corresponds to a maximum displacement position Ma.

The range between the minimum displacement position Mi and the maximum displacement position Ma is a target zone 72 in which a target displacement position T should be arranged. When teaching the joining arrangement, it is ensured that the target displacement position T is arranged in the target zone 72. The indicators Z, Mi, and Ma are collectively referred to as displacement indicators 75.

Fig. 3 shows another embodiment of a joining arrangement 10B which corresponds with respect to layout and function to the joining arrangement 10 of Fig. 1 and of Figs. 2a, 2b. In the following, essentially differences will be explained.

The first part 50 of the adapter device 16B of Fig. 3 includes a head attachment arrangement 76. The head attachment arrangement 76 includes a dovetail clamp 78 which can be operated by a clamp screw 80. The head attachment arrangement 76 therefore can be operated as a dovetail attachment arrangement, wherein the clamp screw 80 is prestressed into a non-attachment position by means of a clamp return spring 82.

Fig. 3 also shows that the linear guide 54 of the adapter device 16B includes a limit stop 66 for limiting the relative displacement between the first and second parts 50, 52 to a maximum displacement position Ma.

In addition, Fig. 3 shows that a damper arrangement 64 may be arranged on the first part 50 (or on the second part 52), in order to dampen relative return movements of the first and second parts into the zero-displacement position.

The zero-displacement sensor 62 includes a Hall-sensor which is arranged on the joining head housing (or on the first part 50) and which detects the presence or non-presence of a counter-member 84 fixedly attached to the second part 52.

### Reference numbers:

- 10: joining arrangement
- 12: industrial robot
- 14: joining head
- 16: adapter device
- 18: arm(s) of robot
- 20: mounting plate of robot
- 22: robot base
- 24: control device of robot (at robot base or higher level control device)
- 26: component (e.g. metal sheet)

- 30: joining head housing
- 32: joining device
- 34: holding device
- 36: joining element (e.g. stud)
- 37: joining location on 26
- 38: reference member
- 40: supply interface (energy, control signals, joining elements, etc.)
- 42: control device of joining head (at head or higher level control device)
- 44: joining axis
- 46: joining device movements

- 50: first part
- 52: second part
- 54: linear guide
- 56: spring member
- 58: sensor arrangement
- 60: zero-displacement position sensor
- 62: sensor signal interface
- 64: damper arrangement
- 66: limit stop
- 70: calibration arrangement
- 72: target zone
- 74: displacement reference line on head (70)
- 75: displacement indicators
- 76: head attachment arrangement
- 78: dovetail clamp
- 80: clamp screw
- 82: clamp return spring
- 84: counter-member

- A: connection 12/14
- D: displacement direction
- Z: zero-displacement position
- Mi: minimum displacement position
- T: target displacement position
- Ma: maximum displacement position
- L1: maximum displacement length
- L2: target zone length
- F: pressing force
- S: ground/ station
- H: component holder

## Claims

1. An adapter device (16) suitable for attaching a joining head (14) or a component holder (H) to a robot (12), comprising:
- a first part (50) which is configured to be fixedly attached to a joining head (14) which defines a joining axis (44) or to a component holder (H) for a component (26) which defines a joining axis (44); and
- a second part (52) which is configured to be fixedly attached to a robot arm (18),
wherein the first part (50) and the second part (52) are connected to each other by means of a linear guide (54) so that the first and second parts (50, 52) can be moved relative to each other in a displacement direction (D) which is parallel to the joining axis (44),
wherein the first part (50) and the second part (52) are elastically prestressed into a zero-displacement position (Z), and
wherein the second part (52), when being moved in the displacement direction (D), is elastically displaced against the first part (50) if the first part (50) is held against movements in the displacement direction (D).

2. The adapter device of claim 1, wherein the relative displacement is limited to a maximum displacement length (L1) of 70 mm or less, particularly of 50 mm or less.

3. The adapter device of claim 1 or 2, comprising a sensor arrangement (58) adapted to detect a relative movement of the first and second parts (50, 52).

4. The adapter device of claim 3, wherein the sensor arrangement (58) comprises a zero-displacement position sensor (60) which is configured to detect whether the first and second parts (50, 52) reside in the zero-displacement position (Z), or not.

5. The adapter device of claim 3 or 4, wherein the sensor arrangement (58) comprises a sensor signal interface (62) configured for transmitting a sensor signal carrying information on the relative movement of the first and second parts (50, 52) to a joining head (14) (50).

6. The adapter device of any of claims 1 to 5, wherein the first part (50) and the second part (52) are elastically biased into the zero-displacement position (Z) by a spring member (56).

7. The adapter device of any claims 1 to 6, wherein the first and second parts (50, 52) are configured to be displaced into a target displacement position (T) which is located between the zero-displacement position (Z) and a maximum displacement position (Ma).

8. The adapter device of claims 6 and 7, wherein the spring member (56) is configured to establish a pressure force of larger than 100 N and less than 400 N when the first and second parts (50, 52) are relatively moved into the target displacement position (T).

9. The adapter device of any of claims 1 to 8, wherein a return movement damper arrangement (64) is located on the first part (50) and/or on the second part and is configured to dampen a relative return movement of the first and second parts (50, 52) into the zero-displacement position (Z).

10. A joining arrangement (10) comprising a joining head (14) and an adapter device (16) of anyone of claims 1 to 9, wherein the joining head (14) or a component holder (H) is attached to the first part (50) of the adapter device (16), and wherein the joining head (14) is configured to perform a joining operation on a component (26).

11. The joining arrangement of claim 10, wherein the joining head (14) comprises a reference member (38) associated to the joining head (14) in a manner projecting therefrom and configured to contact the component (26) on which the joining operation is to be performed.

12. A method for performing a joining operation at a joining location (37) on a component (26), particularly by using a joining arrangement (10) of claim 10 or claim 11, the method comprising the steps of:
- performing, by a robot (12), a first relative movement between a joining head (14) and the component (26) to a starting position in which a reference member (38) associated with the joining head (14) contacts a surface of the component (26);
- performing a second movement of the robot (12) to a fixation position, wherein the second movement involves a relative elastic displacement in an adapter device (16) connecting the joining head (14) and the robot (12) or connecting the component holder (H) and the robot (14) so that the component (26) is fixed by the reference member (38) for a subsequent joining operation; and
- performing the joining operation.
